(19) **Europäisches Patentamt**

**European Patent Office**

**Office européen des brevets**

(11) **EP 0 700 007 B1**

(12) **EUROPÄISCHE PATENTSCHRIFT**

(45) Veröffentlichungstag und Bekanntmachung des Hinweises auf die Patenterteilung:
**12.09.2001 Patentblatt 2001/37**

(51) Int Cl.⁷: **G06F 17/30**

(21) Anmeldenummer: **95109004.2**

(22) Anmeldetag: **06.06.1995**

(54) **Hash-Adressierungs- und Speicherverfahren zum Ablegen und Wiedergewinnen von Daten in einem adressierbaren Speicher**

Hash addressing and storage method for storage and retrieval of data in an addressable memory

Procédé d'adressage à clé d'accès et de stockage pour le stockage et le recouvrement de données dans une mémoire adressable

(84) Benannte Vertragsstaaten:
**DE FR GB NL SE**

(30) Priorität: **21.06.1994 DE 4421640**

(43) Veröffentlichungstag der Anmeldung:
**06.03.1996 Patentblatt 1996/10**

(73) Patentinhaber: **SIEMENS AKTIENGESELLSCHAFT**
**80333 München (DE)**

(72) Erfinder: **Lauther, Ulrich, Prof. Dr.**
**D-80686 München (DE)**

(56) Entgegenhaltungen:
• **Keine einschlägigen Dokumente gefunden**

**Beschreibung**

Häufig sind bei Datenverarbeitungsanwendungen Zugriffe auf miteinander verbundene Daten erforderlich. Ein Grund solche Daten miteinander zu verbinden, kann beispielsweise darin bestehen, daß ein Datum auf mehrere weitere Datensätze verweist, auf die fallweise zugegriffen werden soll. Ein weiterer Grund dafür kann darin bestehen, daß parallel auf unterschiedliche Datensätze zugegriffen werden muß und daß eine ständige Verbindung dieser Datensätze auch eine nachteilige Auswirkung auf die Geschwindigkeit der Datenverarbeitung hätte. Vielfach handelt es sich bei solchen verbundenen Daten um Tabellen oder Listen, die aufeinander verweisen. In der Kommunikationstechnik und im Bereich der künstlichen Intelligenz werden solche verbundene Daten oder Listen häufig verwendet. Es sind jedoch auch andere Einsatzbereiche denkbar, in denen es darauf ankommt, Informationen, die miteinander assoziiert sind, schnell zu finden. Im Bereich der Kommmunikationstechnik haben sich für miteinander verbundene Daten, die hierarchisch aufeinander aufbauen, auch die Begriffe "Schlüssel" und damit "assoziierter Information" etabliert. Gerade in solchen Bereichen, wo häufig auf große Informationsmengen zugegriffen werden muß, ist es besonders wichtig, Speicherplatz zu sparen, um zum einen die Kosten für eine Datenverarbeitungsanlage senken zu können und zum anderen die Datenverarbeitungsgeschwindigkeit zu erhöhen.

Eine bekannte Lösung zum Adressieren von Tabellen in Speichern stellt z.B. das Hash-Verfahren dar. Der Suchschlüssel als Teil einer zu speichernden Information, oder die gesamte Information, wird hier direkt in einer Hash-Funktion verwendet, die im Idealfall direkt die gesuchte Speicherstelle der Tabelle als Ergebnis liefert. In diesem Fall wäre bei gängigen Hash-Verfahren der Suchschlüssel direkt unter dieser Adresse abgespeichert. Dieses Verfahren ist im allgemeinen sehr schnell, jedoch nicht sehr speichereffizient, da der Schlüssel zusätzlich im Speicher abgelegt werden muß. Vor allem in solchen Anwendungsfällen, in denen sehr viel Information in vielen dezentralen Einheiten abgespeichert werden soll, auf welche durch das Hash-Verfahren fallweise zugegriffen wird, ist diese uneffiziente Speichernutzung von Nachteil. Dieser Nachteil wirkt sich vor allen Dingen bei der Verwendung von vielen Schlüsseln, d.h. bei kleinen Tabelleneinträgen, die separat auffindbar sein müssen, sowie bei sehr langen Suchschlüsseln aus.

Folglich wäre es bei dezentralen Anwendungen, welche kostengünstig realisiert werden müssen und welche viele Tabelleneinträge gespeichert enthalten, auf die fallweise zugegriffen wird, sinnvoll auf den Schlüssel als Tabelleneintrag zu verzichten. Viele Hash-Funktionen bewerkstelligen jedoch keine eindeutige Zuweisung, d.h. zu unterschiedlichen Parameterwerten können möglicherweise die gleichen Schlüssel gefunden werden. Falls man auf den Schlüsseleintrag in der Tabelle verzichtet, ergibt sich das neue Problem, eine eindeutige Zuordnung des Schlüssels zu der abgespeicherten Information sicherzustellen. Auch muß zuverlässig vermieden werden können, daß durch eine Fehleingabe, d.h. einen falschen Schlüssel, ein Speichereintrag der zu einem anderen Schlüssel gehört, überschrieben bzw. ausgelesen werden kann.

Die Grundlagen zu Hash-Speicherverfahren sind in: Ollmert, H.J., "Datenstrukturen und Datenorganisationen", Oldenbourg, 1989, Seite 133 bis 162 beschrieben.

Die der Erfindung zugrundeliegende Aufgabe besteht darin, ein Hash-Zugriffsverfahren auf einen adressierbaren Speicher anzugeben, bei dem auf einen Schlüsseleintrag im Speicher verzichtet werden kann.

Diese Aufgabe wird gemäß den Merkmalen des Patentanspruchs 1 gelöst.

Weiterbildungen der Erfindung ergeben sich aus den Unteransprüchen.

Ein großer Vorteil des erfindungsgemäßen Verfahrens besteht darin, daß auf die Schlüsseleinträge im Speicher verzichtet werden kann, so daß lediglich die abzuspeichernde Information im Speicher abzulegen ist. Weiterhin kann durch die Anzahl der eingesetzten Hash-Funktionen die Zugriffsgenauigkeit beliebig bestimmt werden, da mit zunehmender Anzahl voneinander unabhängiger Hash-Funktionen mehr Schlüsselgültigkeitsinformationen zur Verfügung stehen und somit eine genauere Überprüfung der Gültigkeit eines Schlüssels möglich wird.

Ein weiterer Vorteil des erfindungsgemäßen Verfahrens besteht darin, daß die zu speichernde Information lediglich einmal in einem Speicherbereich abgelegt werden muß. Die Schlüsselgültigkeitsinformation, welche in weiteren Speicherbereichen abgelegt wird, kann lediglich in einem Bit bestehen, das gesetzt wurde und verbraucht so minimalen Speicherplatz.

Vorteilhaft ist es, die Gültigkeit eines Schlüssels durch das Vorhandensein der Schlüsselgültigkeitsinformation in einem weiteren Speicherbereich zu überprüfen. Durch das erfindungsgemäße Verfahren wird wegen der Anwendung voneinander unabhängiger Hash-Funktionen auf den Schlüssel sichergestellt, daß bei Fehleingaben, bzw. falschen Schlüsseln, in weiteren Speicherbereichen keine Schlüsselgültigkeitsinformation gefunden werden kann, bzw. durch die Zahl der Treffer bei Schlüsselgültigkeitsinformationen eine Wahrscheinlichkeitsaussage über die Gültigkeit eines Schlüssels getroffen werden kann.

Um die Zugriffsgeschwindigkeit auf die jeweiligen Informationen zu beschleunigen, kann es günstig sein, separate Speicherbereiche für die Schlüsselgültigkeitsinformation und die abzuspeichernden Daten vorzusehen. Besonders vorteilhaft kann dabei die Zuweisung eines Speicherbereiches zu je einem Adreßbereich sein, der durch eine jeweilige Hash-Funktion generiert wird.

Besonders vorteilhaft kann durch das erfindungsgemäße Verfahren eine Aussage über die Gültigkeit eines Schlüssels getroffen werden, indem die Zahl der Schlüsselgültigkeitsinformationen zu der Zahl der verwalteten Schlüssel, bzw. der angewendeten Hash-Funktionen in Bezug gesetzt wird. So kann in Abhängigkeit der Applikationsanforderungen eine Zugriffsgenauigkeit optimiert werden.

Vorteilhaft lassen sich durch Einsatz des erfindungsgemäßen Verfahrens Adreßkollisionen schnell erkennen und folglich schnell Überlaufstrategien einsetzen.

Weiterhin kann vorteilhaft aus dem Nichtvorhandensein von Schlüsselgültigkeitsinformation geschlossen werden, daß

a) ein fehlerhafter Schlüssel eingegeben wurde, oder

b) der übertragene Datensatz fehlerhaft war und so die Anwendung eines Fehlerkorrekturverfahrens auf den Datensatz eingeleitet bzw. eine erneute Übertragung des Datensatzes angefordert werden.

Besonders günstig ist der Einsatz des erfindungsgemäßen Verfahrens in einem Verkehrsleitsystem für KFZ, bei dem an Verkehrsknoten beispielsweise Informationsspeicher, welche Straßennamen und Richtungsinformationen enthalten, vorgesehen sind. Diese Informationen können durch ein KFZ fallweise abgefragt werden und durch die erfindungsgemäße Realisierung wird sichergestellt, daß die Kosten, die vor Ort anfallen, gering sind und die Zugriffsgeschwindigkeit auf die abgefragten Daten optimiert wird.

Besonders vorteilhaft ist es, das erfindungsgemäße Verfahren in Parallelbetrieb abzuarbeiten, da die einzelnen Schritte, d.h. die Berechnung der jeweiligen Hash-Funktion und die Zugriffe auf die unterschiedlichen Tabelleneinträge voneinander unabhängig sind und so die Geschwindigkeit bei der Bearbeitung eines Suchbefehles maximiert werden kann.

Im folgenden wird die Erfindung anhand von Figuren weiter erläutert.

Figur 1 zeigt beispielhaft einen Zugriff nach dem erfindungsgemäßen Verfahren.

Figur 2 gibt den Zusammenhang zwischen der Zahl der verwendeten Schlüssel und der Zahl der zusätzlich angewandten Hash-Funktion in Verbindung mit der Genauigkeit des Zugriffs auf einen Schlüssel an.

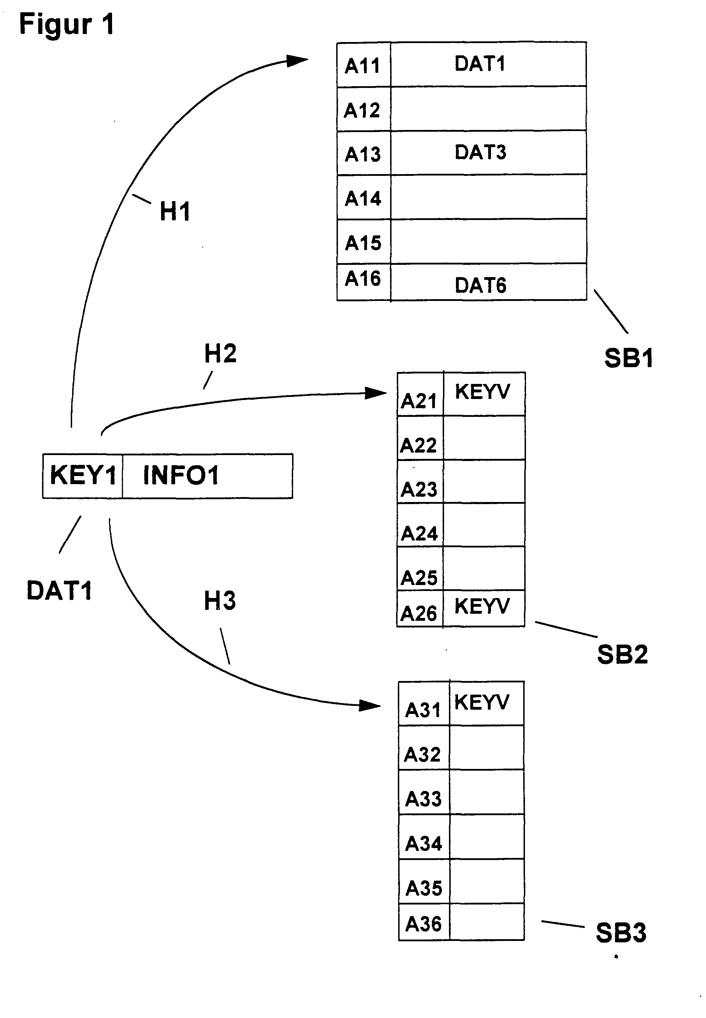

Figur 1 zeigt ein Beispiel für das erfindungsgemäße Adressierungs- und Speicherverfahren. Es ist dargestellt ein Datensatz DAT1, welcher als Bestandteil einen Schlüssel KEY1 und eine zugehörige Information INFO1 enthält. Für das erfindungsgemäße Verfahren ist es unerheblich, ob ein Schlüssel zunächst als Datensatz übertragen wird und dann umgewandelt wird, oder ob ein Teil eines Datensatzes als Schlüssel Verwendung findet. Im ersten Fall muß lediglich die auf den Schlüssel KEY1 folgende Information INFO1 praktisch als zweiter Datensatz unter der Adresse, die durch Anwendung einer Hash-Funktion auf den Schlüssel KEY1 gefunden wurde, eingetragen werden.

In Figur 1 sind weiterhin verschiedene Speicherbereiche SB1 bis SB3 dargestellt. Im Speicherbereich SB1 sind Adressen A11 bis A16 vorhanden. Weiterhin ist dort ein Speicherplatz für Dateneinträge vorgesehen. Beispielhaft sind dort Dateneinsätze DAT1, DAT3 und DAT6 eingetragen. Weiterhin sind Speicherbereiche SB2 und SB3 vorhanden, in denen Schlüsselgültigkeitsinformationen abgelegt ist. In SB2 sind die Adressen A21 bis A26 vorhanden und unter der Adresse A21 bzw. A26 ist eine Schlüsselgültigkeitsinformation, beispielsweise in Form eines gesetzten Bit, abgelegt. Im Speicherbereich SB3 sind Adressen A31 bis A36 vorhanden und unter der Adresse A31 ist eine Schlüsselgültigkeitsinformation KEYV abgelegt. Der Schlüssel im Datensatz DAT1 kommt beispielsweise über eine Datenleitung an, oder wird von einem Bediener an einer Datenverarbeitungsanlage als Suchbegriff eingegeben, um entweder einen Speicherinhalt einschreiben oder auslesen zu können. Durch Anwendung einer Hash-Funktion H1 auf den Schlüssel KEY1 wird die Adresse A11 des Speicherbereiches SB1 gewonnen. Im Falle eines Schreibvorganges wird nun der Datensatz DAT1 an der vorgesehenen Speicherstelle im Speicherbereich SB1 unter der Adresse A11 abgelegt. Fallsweise kann es auch günstig sein, lediglich die Information INFO1 des Datensatzes DAT1 an der entsprechenden Adresse A11 zu speichern. Dies ist besonders dann günstig, wenn der Schlüssel separat eingegeben wird und sonst keinen Bezug zu der Information, die abgespeichert werden soll, hat.

Das erfindungsgemäße Verfahren sieht nun weiterhin vor, da der Schlüssel selbst im Speicherbereich SB1 unter der Adresse A11, wie erfindungsgemäß vorgesehen, nicht abgelegt wird, auf den Schlüssel eine andere Hash-Funktion H2 anstatt von H1 anzuwenden und dadurch eine Adresse A21 im Speicherbereich SB2 zu erhalten. Durch die Wahl der Hash-Funktionen kann man sicherstellen, daß A21 im Speicherbereich SB2 nicht mit der Adresse A11 im Speicherbereich SB1 übereinstimmt. Unter der Adresse A21 in dem Speicherbereich SB2 wird nun lediglich eine Schlüsselgültigkeitsinformation KEYV abgelegt. Diese Schlüsselgültigkeitsinformation kann beispielsweise in einem einzigen gesetzten Bit bestehen.

Weiterhin sieht es das erfindungsgemäße Verfahren vor, nun auf den Schlüssel KEY zusätzlich eine Hash-Funktion H3 anzuwenden, welche einen Adreßwert A31 im Speicherbereich SB3 liefert. Unter diesem Adreßwert wird weiterhin eine zu KEY aus DAT1 gehörende Schlüsselgültigkeitsinformation KEYV abgelegt. Durch die Vermeidung eines Schlüsseleintrags im Speicherbereich SB1 und weiterhin die Abspeicherung lediglich einer Schlüsselgültigkeitsinformation KEYV in den weiteren Speicherbereichen SB2 und SB3 wird eine optimale Speichernutzung erzielt. Diese optimale Speichernutzung ist besonders günstig, wenn in verschiedenen dezentralen Knoten auch viele Informationen, die jeweils durch einen Schlüsseleintrag erreichbar sind, zugegriffen werden sollen.

Durch das erfindungsgemäße Verfahren wird auch die Zugriffsgeschwindigkeit beschleunigt, da die notwendigen Suchvorgänge wegen der kleinen Speichereinträge schneller ablaufen können.

Hier sind lediglich drei Speicherbereiche SB1 bis SB3 dargestellt. Charakteristisch ist hier besonders für das erfindungsgemäße Verfahren, daß die Information INFO1 des Datensatzes DAT1 lediglich in einem dieser Speicherbereiche abgelegt wird. Die weiteren Speicherbereiche enthalten dann lediglich Schlüsselgültigkeitsinformationen für den Schlüssel, welcher für DAT1 maßgeblich ist. Um zum Auslesen des Datensatzes DAT1 auf den Dateneintrag über den Schlüssel KEY zugreifen zu können, wird beispielsweise wie folgt vorgegangen: Der Schlüssel KEY1 des Datensatzes DAT1 wird dem erfindungsgemäßen Verfahren zur Verfügung gestellt. Aus dem Schlüssel, welcher für jeden Datensatz ein anderer sein muß, wird durch Anwendung der Hash-Funktionen H1 bis H3 eine jeweilige zugehörige Adresse A11, A21 und A31 ermittelt. Aus der Anwendung des erfindungsgemäßen Verfahrens beim Speichervorgang geht klar hervor, unter welcher Adresse der Dateneintrag DAT1 zu finden ist. Hier in diesem Beispiel befindet er sich unter Adresse A11 des Speicherbereiches SB1. Um sicherzustellen, daß ein gültiger Schlüssel eingetragen wurde, welcher in Bezug zum Datensatz DAT1 im Speicherbereich SB1 steht, wird nun mit Hilfe der Einträge im Speicherbereich SB2 und SB3 überprüft, ob der Schlüssel gültig ist. Hierzu wird nachgesehen, ob im Speicherbereich SB2 unter der Adresse A21 die Schlüsselgültigkeitsinformation KEYV für den Schlüssel KEY abgelegt ist. Dasselbe geschieht im Speicherbereich SB3 unter der Adresse A31. In diesem Fall sind beide Schlüsselgültigkeitsinformationen vorhanden. Da diese Schlüsselgültigkeitsinformationen erhalten wurden, indem völlig verschiedene Hash-Funktionen auf den Schlüssel angewendet wurden, kann davon ausgegangen werden, daß der Schlüssel KEY und der Datensatz DAT1 zusammengehören. Falls ein falscher Schlüssel eingegeben worden wäre, so hätte eventuell der Dateneintrag unter der Speicherstelle A11 gefunden werden können, jedoch hätte es das erfindungsgemäße Verfahren unwahrscheinlich gemacht, daß ebenfalls im Speicher SB2 und SB3 unter A21 bzw. A31 eine Schlüsselgültigkeitsinformation gefunden worden wäre, da ein fehlerhafter Schlüssel zu einer jeweils i.A. verschiedenen Adresse in diesen Speicherbereichen hingeführt hätte.

Je mehr Speicherbereiche beim erfindungsgemäßen Verfahren über unabhängige Hash-Funktionen adressiert werden, um die Schlüsselgültigkeitsinformation abzulegen, desto sicherer ist die Aussage, welche über die Gültigkeit des Schlüssels getroffen werden kann.

Ein weiteres Beispiel ergibt sich aus der Betrachtung des Speicherbereiches SB1. Beispielsweise ist aus einem Schlüssel in einem Datensatz die Adresse A13 des Speicherbereiches SB1 ermittelt worden, um einen Datensatz DAT3 einzuschreiben oder auszulesen. Die Anwendung der Hash-Funktion H2 auf diesen Schlüssel ergibt beispielsweise eine Adresse A24 im Speicherbereich SB2. Die Anwendung der Hash-Funktion A3 auf diesen Schlüssel ergibt beispielsweise einen Adreßeintrag A35 im Speicherbereich SB3. Zur Sicherstellung der Schlüsselgültigkeit wird nun überprüft, ob dort ein Schlüsselgültigkeitseintrag vorhanden ist. Dieser Schlüsselgültigkeitseintrag wird nicht gefunden, deshalb ist der Schlüssel nicht gültig, d.h. es darf unter A13 unter Verwendung dieses Schlüssels nicht zugegriffen werden. Dies bedeutet beispielsweise, daß der Datensatz DAT3 weder überschrieben noch ausgelesen werden darf, da es so zu Fehlern kommen könnte. Ein falscher Schlüssel kann beispielsweise eingegeben werden, indem auf einer Transportstrecke der Dateninformation ein Fehler geschieht, oder indem ein Benutzer beispielsweise einen Straßennamen fehlerhaft eingibt. Vorteilhaft kann es sein, diesen Datensatz, welcher den falschen Schlüssel enthält von seinem Sender erneut anzufordern, oder auf diesen Datensatz einen Fehlerkorrekturalgorithmus anzuwenden, um den falschen Schlüssel zu korrigieren. Es kann aber auch günstig sein, eine Fehlermeldung auszugeben, um einen Benutzer der Datenverarbeitungsanlage darauf hinzuweisen, daß er einen neuen Schlüssel eingeben soll.

Analoge Betrachtungen lassen sich zu dem Dateneintrag DAT6 im Speicherbereich SB1 anstellen, welcher sich dort unter der Adresse A16 befindet. Falls durch einen Schlüssel auf diesen Datensatz zugegriffen werden soll, so findet man durch Anwendung von H2 auf diesen Schlüssel unter A26 eine Schlüsselgültigkeitsinformation im Speicherbereich SB2. Im Speicherbereich SB2 ist durch Anwendung der Hash-Funktion H3 auf diesen Schlüssel jedoch unter A36 keine Schlüsselgültigkeitsinformation abgelegt. Das erfindungsgemäße Verfahren sieht es nun vor, in Abhängigkeit der Zahl der aufgefundenen Schlüsselgültigkeitsinformationen und in Relationen zu der Zahl der verwalteten Schlüsselgültigkeitsinformationen eine Wahrscheinlichkeitsaussage über die Schlüsselgültigkeit zu machen. In diesem Fall läge die Wahrscheinlichkeit, daß der Schlüssel gültig ist, bei 50%.

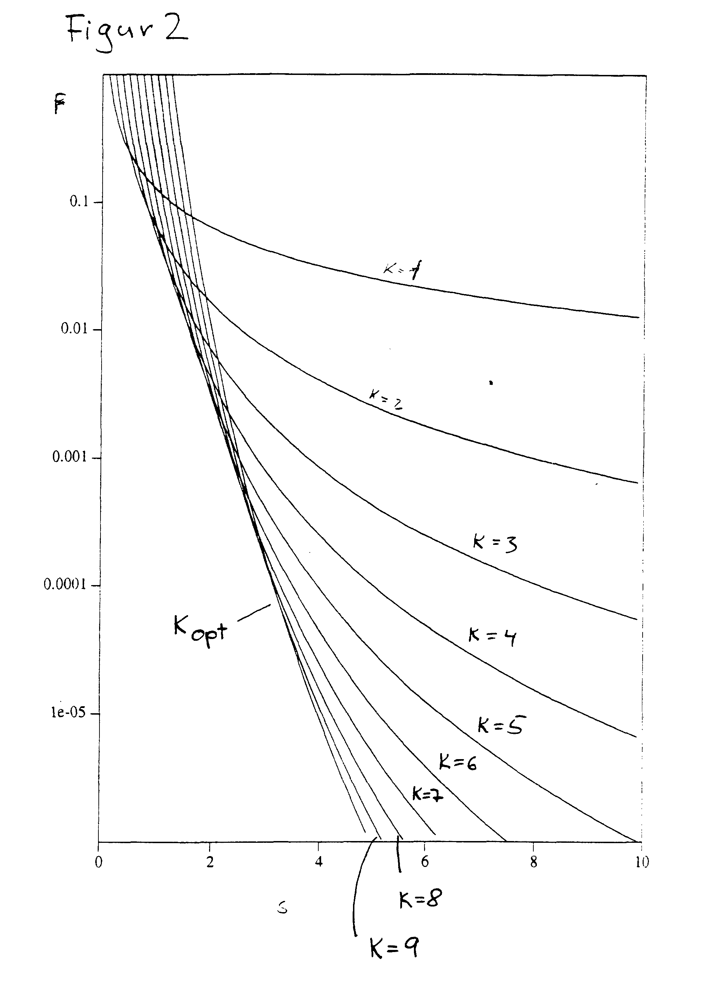

Es ist leicht erkennbar, daß bei Anwendung mehrerer Speicherbereiche und mehrerer Hash-Funktionen, welche diesen Speicherbereichen zugeordnet sind, für die Ablage von Schlüsselgültigkeitsinformationen die Wahrscheinlichkeit für eine Schlüsselgültigkeit besser bestimmt werden kann. Beispielsweise würde bei 5 zusätzlichen Speicherbereichen für Schlüsselgültigkeitsinformationen und bei einem fehlerhaften Eintrag zu einem Schlüssel die Wahrscheinlichkeit für die Gültigkeit des Schlüssels 92% betragen, während sie bei einem Speicherbereich nur 50% beträgt. Die genauen Zusammenhänge zwischen der Zahl der Schlüsselgültigkeitsinformationen, der Anzahl der verwendeten Schlüssel und der Zahl der verwendeten Hash-Funktionen wird in Figur 2 erläutert.

Figur 2 zeigt den Zusammenhang der Größen P, s und K. P bedeutet dabei die Wahrscheinlichkeit mit der ein Schlüssel falsch zu einem Datensatz zugeordnet wird. s bedeutet dabei den zusätzlichen Speicherplatz pro Schlüssel in Bytes in Abhängigkeit der zusätzlich geführten Hash-Tabellen. K bedeutet die Zahl von zusätzlich geführten Hash-Tabellen der Größe m, die ebenfalls für die Größe des Speichers der zu speichernden Daten maßgeblich ist.

Durch das erfindungsgemäße Verfahren wird mit geringem Zusatzaufwand an Speicherplatz und Abfragezeit ein vorgebbares Maß an Fehlertoleranz erreicht. Bei Verwendung lediglich einer Hash-Tabelle der Größe m, ergäbe sich bei n gespeicherten Informatio-nen eine Wahrscheinlichkeit von

$$p = \left(\frac{n}{m}\right)$$

für eine falsche Antwort bei fehlerhafter Eingabe des Schlüssels. Beispielsweise beträgt der Speicherplatz in der Hash-Tabelle in diesem Fall n x 4 Byte (bei 4 Byte Pointern, welche auf Zusatzinformationen verweisen). Bei der Verwaltung von K zusätzlichen Hash-Tabellen der Größe m, welche beispielsweise pro Eintrag lediglich 1Bit belegen und angeben, ob der gehashte Schlüssel existiert oder nicht, kann man das erfindungsgemäße Verfahren mit minimalem Aufwand durchführen. Als Voraussetzung sind hier beispielsweise die benutzten jeweiligen verschiedenen Hash-Funktionen gegenseitig unabhängig. Damit verringert sich die Wahrscheinlichkeit für falsche Antworten auf:

$$P = \left(\frac{n}{m}\right)^K$$

Beispielsweise kann man diese Wahrscheinlichkeit verringern, indem entweder m oder K erhöht wird. Bei vorgegebenem Speicherplatz gibt es eine optimale Kombination von m und K, welche sich auf einfache Weise analytisch bestimmen läßt. Es ergibt sich:

$$K = 8se^{-1}$$

mit s = S/n: zusätzlicher Speicherplatz pro Name in Bytes und die Fehlerwahrscheinlichkeit zu:

$$P = \left(\frac{1}{e}\right)^{\frac{8s}{e}} = 0.527055^s$$

So ergibt sich schon mit relativ kleinem Zusatzspeicher eine sehr niedrige Wahrscheinlichkeit für falsche Antworten. Beispielsweise ergeben 3 Byte Speicher eine Fehlerwahrscheinlichkeit von 0,14 Promille. In Figur 2 ist die optimale Anzahl von zusätzlichen Hash-Tabellen für die Verwaltung einer Schlüsselgültigkeits-information mit $K_{opt}$ dargestellt.

**Patentansprüche**

1. Hash-Adressierungs- und Speicherverfahren zum Ablegen eines Datensatzes in einem adressierbaren Speicher,

   a) bei dem durch Anwendung einer ersten Hash-Funktion (H1) auf mindestens einen als Schlüssel (KEY) bezeichneten Teil eines abzuspeichernden ersten Datensatzes (DAT1) die erste Adresse (A11) eines ersten Speicherbereiches (SB1) im adressierbaren Speicher gefunden wird,
   b) bei dem im ersten Speicherbereich (SB1) der Datensatz (DAT1) an der ersten Adresse (A11) abgelegt wird,
   c) bei dem durch Anwendung mindestens einer weiteren, zweiten, Hash-Funktion (H2) auf den Schlüssel (KEY) die zweite Adresse (A21) eines zweiten Speicherbereiches (SB2) im adressierbaren Speicher gefunden wird,
   d) und bei dem im zweiten Speicherbereich (SB2) lediglich eine Schlüsselgültigkeitsinformation (KEYV) abgelegt wird.

2. Verfahren nach Anspruch 1, bei dem die Schlüssel-gültigkeitsinformation (KEYV) durch das Vorhan-densein eines Bits im Speicher angezeigt wird.

3. Verfahren nach einem der vorangehenden Ansprüche, bei dem die Zusammengehörigkeit eines Schlüssels (KEY) zu einem Datensatz (DAT1) dadurch überprüft wird, ob mindestens im zweiten Speicherbereich (SB2) unter der zweiten Adresse (A21) die Schlüsselgültigkeitsinformation (KEYV) abgelegt ist.

4. Verfahren nach einem der vorangehenden Ansprüche, bei dem je angewandter Hash-Funktion (H1, H2, H3) ein separater Speicherbereich (SB1, SB2, SB3) zur Ablage von zu speichernden Informationen (INFO) verwendet wird.

5. Verfahren nach einem der vorangehenden Ansprüche, bei dem für die Beurteilung der Zulässigkeit eines Einschreib- oder Auslesevorganges am Speicher in Bezug auf einen aktuellen Schlüssel (KEY) eine Schlüsselgültigkeitswahrscheinlichkeit verwendet wird, welche mindestens davon abhängt, wie viele Schlüsselgültigkeitsinformationen (KEYV) je Schlüssel verwaltet werden und wie viele Schlüsselgültigkeitsinformationen (KEYV) zum aktuellen Schlüssel (KEY) gefunden wurden.

6. Verfahren nach Anspruch 5, bei dem die Schlüsselgültigkeitswahrscheinlichkeit zur Kollisionserkennung verwendet wird.

7. Verfahren nach einem der vorangehenden Ansprüche, bei dem falls mindestens eine Schlüsselgültigkeitsinformation (KEYV) nicht vorhanden ist eine Fehlermeldung erzeugt wird.

8. Verfahren nach einem der vorangehenden Ansprüche, bei dem falls mindestens eine Schlüsselgültigkeitsinformation (KEYV) nicht vorhanden ist, eine Fehlerkorrektur mit dem Datensatz (DAT1) durchgeführt wird.

9. Verfahren nach einem der vorangehenden Ansprüche, bei dem die Schlüssel (KEY) Straßennamen sind und im Speicher (SB1) zu den Straßennamen Koordinaten- und Richtungsinformationen (INFO) abgelegt sind.

10. Verfahren nach einem der vorangehenden Ansprüche, bei dem die Berechnung der jeweiligen Hash-Funktionswerte aus einem Schlüssel (KEY) gleichzeitig erfolgt.

11. Verfahren nach einem der vorangehenden Ansprüche, bei dem die Überprüfung der jeweiligen Schlüsselgültigkeitsinformationen (KEYV) zu einem Schlüssel (KEY) gleichzeitig erfolgt.

12. Verfahren nach einem der vorangehenden Ansprüche, bei dem auf den Datensatz (DAT1) und die Schlüsselgültigkeitsinformationen (KEYV) gleichzeitig zugegriffen wird.

**Claims**

1. Hash addressing and storage method for storing a data record in an addressable memory,

a) in which applying a first hash function (H1) to at least one part, called a key (KEY), of a first data record (DAT1) which is to be stored finds the first address (A11) of a first memory area (SB1) in the addressable memory,
b) in which the first memory area (SB1) stores the data record (DAT1) at the first address (A11),
c) in which applying at least one further, second hash function (H2) to the key (KEY) finds the second address (A21) of a second memory area (SB2) in the addressable memory,
d) and in which the second memory area (SB2) stores only a key validity information item (KEYV).

2. Method according to Claim 1, in which the key validity information item (KEYV) is indicated by the presence of a bit in the memory.

3. Method according to one of the preceding claims, in which the association of a key (KEY) with a data record (DAT1) is checked by determining whether at least the second memory area (SB2) stores the key validity information item (KEYV) under the second address (A21).

4. Method according to one of the preceding claims, in which, for each applied hash function (H1, H2, H3), a separate memory area (SB1, SB2, SB3) is used for storing information (INFO) which is to be stored.

5. Method according to one of the preceding claims, in which, to assess the admissibility of a write or read operation on the memory in relation to a current key (KEY), a key validity probability is used which is at least dependent on how many key validity information items (KEYV) are managed for each key and how many key validity information items (KEYV) have been found for the current key (KEY).

6. Method according to Claim 5, in which the key validity probability is used for collision detection.

7. Method according to one of the preceding claims, in which an error message is generated if at least one key validity information item (KEYV) is not present.

8. Method according to one of the preceding claims, in which error correction is carried out with the data record (DAT1) if at least one key validity information item (KEYV) is not present.

9. Method according to one of the preceding claims, in which the keys (KEY) are road names and the memory (SB1) stores coordinate and direction information (INFO) for the road names.

10. Method according to one of the preceding claims, in which the respective hash function values are calculated from a key (KEY) at the same time.

11. Method according to one of the preceding claims, in which the respective key validity information items (KEYV) for a key (KEY) are checked at the same time.

12. Method according to one of the preceding claims, in which the data record (DAT1) and the key validity information items (KEYV) are accessed at the same time.

## Revendications

1. Procédé d'adressage à clef d'accès et de stockage pour l'archivage d'un bloc de données dans une mémoire adressable,

   a) au cours duquel, en appliquant une première fonction de hachage (H1) sur au moins une partie, désignée comme clef (KEY), d'un premier bloc de données à mémoriser (DAT1), on trouve la première adresse (A11) d'une première zone de stockage (SB1) dans la mémoire adressable,
   b) au cours duquel le bloc de données (DAT1) est archivé sous la première adresse (A11) dans la première zone de stockage (SB1),
   c) au cours duquel, en appliquant au moins une deuxième et différente fonction de hachage (H2) sur la clef (KEY), on trouve la deuxième adresse (A21) d'une deuxième zone de stockage (SB2) dans la mémoire adressable,
   d) et au cours duquel seule une information de validité de clef (KEYV) est stockée dans la deuxième zone de stockage (SB2).

2. Procédé selon la revendication 1 au cours duquel l'information de validité de clef (KEYV) est indiquée par la présence d'un bit dans la mémoire.

3. Procédé selon l'une des revendications précédentes au cours duquel la concordance d'une clef (KEY) avec un bloc de données (DAT1) est vérifiée en contrôlant si l'information de validité de la clef (KEYV) est archivée au moins dans la deuxième zone de stockage (SB2) sous la deuxième adresse (A21).

4. Procédé selon l'une des revendications précédentes au cours duquel, pour chaque fonction de hachage utilisée (H1, H2, H3), on utilise une zone de stockage séparée (SB1, SB2, SB3) pour l'archivage d'informations (INFO) à mémoriser.

5. Procédé selon l'une des revendications précédentes au cours duquel, pour apprécier l'admissibilité d'une procédure d'écriture ou de lecture sur la mémoire, on utilise, en relation avec une clef actuelle, une probabilité de la validité de la clef qui dépend au moins de combien d'informations de validité de clef (KEYV) sont gérées par clef et combien d'informations de validité de clef (KEYV) ont été trouvées pour la clef actuelle (KEY).

6. Procédé selon la revendication 5 au cours duquel la probabilité de la validité de la clef est utilisée pour reconnaître une collision.

7. Procédé selon l'une des revendications précédentes au cours duquel, dans le cas où il n'existe pas au moins une information de validité de clef (KEYV), un message d'erreur est généré.

8. Procédé selon l'une des revendications précédentes au cours duquel, dans le cas où il n'existe pas au moins une information de validité de clef (KEYV), une correction d'erreur est exécutée avec le bloc de données (DAT1).

9. Procédé selon l'une des revendications précédentes au cours duquel les clefs (KEY) sont des noms de rue et, dans la mémoire (SB1), des informations de coordonnées et de direction (INFO) sont archivées pour les noms de rue.

10. Procédé selon l'une des revendications précédentes au cours duquel le calcul des valeurs respectives de fonction de hachage à partir d'une clef (KEY) est effectué simultanément.

11. Procédé selon l'une des revendications précédentes au cours duquel la vérification des informations respectives de validité de clef (KEYV) pour une clef (KEY) est effectuée simultanément.

12. Procédé selon l'une des revendications précédentes au cours duquel on a accès simultanément au bloc de données (DAT1) et aux informations de validité de clef (KEYV).

# Figur 1

| A11 | DAT1 |
|-----|------|
| A12 |      |
| A13 | DAT3 |
| A14 |      |
| A15 |      |
| A16 | DAT6 |

**SB1**

H1

H2

| KEY1 | INFO1 |
|------|-------|

DAT1

| A21 | KEYV |
|-----|------|
| A22 |      |
| A23 |      |
| A24 |      |
| A25 |      |
| A26 | KEYV |

**SB2**

H3

| A31 | KEYV |
|-----|------|
| A32 |      |
| A33 |      |
| A34 |      |
| A35 |      |
| A36 |      |

**SB3**

Figur 2